# EUROPÄISCHE PATENTSCHRIFT

(11) **EP 3 444 494 B1**
(45) Veröffentlichungstag und Bekanntmachung des Hinweises auf die Patenterteilung: **25.03.2020**
(21) Anmeldenummer: 18000656.1
(22) Anmeldetag: 07.08.2018
(51) Int. Cl.: F16D 23/02

(54) **SYNCHRONRING FÜR EINE SYNCHRONISATIONSEINHEIT EINES SCHALTGETRIEBES UND VERFAHREN ZU DESSEN HERSTELLUNG**
SYNCHRONIZER RING FOR A SYNCHRONIZATION UNIT OF A GEARBOX AND METHOD FOR PRODUCING THE SAME
BAGUE DE SYNCHRONISATION POUR UNE UNITÉ DE SYNCHRONISATION D'UNE BOÎTE DE VITESSES ET SON PROCÉDÉ DE FABRICATION

(30) Priorität: 19.08.2017 DE 102017007891
(43) Veröffentlichungstag der Anmeldung: 20.02.2019
(73) Patentinhaber: Diehl Metall Stiftung & Co. KG, 90552 Röthenbach (DE)
(72) Erfinder: Arbak, Murat, 91207 Lauf an der Pegnitz (DE)
(74) Vertreter: Diehl Patentabteilung

(56) Entgegenhaltungen:
- DE-A1-102011 015 836
- DE-A1-102014 106 830
- DE-A1-102015 103 405

## Beschreibung

Die Erfindung betrifft einen Synchronring für eine Synchronisationseinheit eines Schaltgetriebes, der aus einem Blechmaterial hergestellt ist und an seiner Innenseite eine konusförmige Reibfläche und an seiner Außenseite Mittel zur radialen Zentrierung des Synchronrings aufweist.

Synchronringe sind Bestandteile von Schaltgetrieben und dienen dazu, eine Schaltmuffe und ein Zahnrad eines gewählten Gangs auf die gleiche Drehzahl zu bringen. Durch die Erzeugung von Reibung werden die Drehgeschwindigkeiten angeglichen, bis beide Komponenten synchron drehen. In diesem Zustand kann die Schaltmuffe axial verschoben werden, wodurch der Gang eingelegt wird.

Ein Synchronring muss innerhalb einer Nabe radial zentriert werden. Die Zentrierung erfolgt über eine Spielpassung, wobei der Innendurchmesser der Nabe und der Außendurchmesser (= Zentrierdurchmesser) des Synchronrings mit entsprechenden Toleranzen ausgelegt sind. Dazu weisen herkömmliche Synchronringe an ihrem Außendurchmesser ein Mittel zur radialen Zentrierung auf, das als Formelement ausgebildet sein kann. Das Formelement kann beispielsweise als massive Nocke ausgebildet sein, die durch einen Schmiedevorgang erzeugt wird. Alternativ kann das Formelement als Lasche ausgebildet sein, die durch Prägen oder Biegen eines Blechmaterials hergestellt wird Einige Ausführungsbeispiele sind in DE 10 2011 015836 und DE 102014 106830 offenbart.

Bei der Herstellung eines Synchronrings aus einem Blechmaterial wie Stahlblech besteht das Problem, dass es meistens nicht möglich ist, das für das Mittel zur radialen Zentrierung zusätzlich benötigte Materialvolumen durch Massivumformung aus dem vergleichsweise dünnen Blechmaterial zu erzeugen.

Bei herkömmlichen aus Stahl hergestellten Synchronringen wird das Mittel zur radialen Zentrierung zumeist durch Stanzen und anschließendes Biegen einer Lasche hergestellt. Der an dieser Stelle beengte Bauraum führt dazu, dass umgebogene Laschen sowohl Risse an der Außenseite als auch Falten an der Innenseite aufweisen können. Diese unerwünschten Effekte reduzieren allerdings die Festigkeit der Lasche unter dynamischen Lastbedingungen. Um dieses Problem zu vermeiden, ist bereits vorgeschlagen worden, die Lasche durch Laserschweißen mit dem Blechring zu verbinden. Laserschweißen erhöht allerdings die Herstellungskosten.

Aus der DE 10 2015 103 405 A ist ein Synchronring bekannt, der gemäß einem Ausführungsbeispiel an seiner Außenseite mehrere an unterschiedlichen Axialpositionen angeordnete und vergleichsweise kurze Zentrierbundabschnitte umfasst. Als Alternative zeigt ein anderes Ausführungsbeispiel wellenförmige Zentrierbundabschnitte, die sich entlang des gesamten Umfangs erstrecken.

Der Erfindung liegt die Aufgabe zugrunde, einen Synchronring anzugeben, dessen Mittel zur radialen Zentrierung kostengünstig herstellbar sind und auch unter dynamischen Lastbedingungen eine ausreichende Festigkeit aufweisen.

Zur Lösung dieser Aufgabe ist bei einem Synchronring der eingangs genannten Art erfindungsgemäß vorgesehen, dass die Mittel zur radialen Zentrierung mehrere separate, voneinander in Umfangsrichtung beabstandete bogenförmige Zentrierbundabschnitte umfassen.

Im Rahmen der Erfindung wurde erkannt, dass mehrere voneinander beabstandete bogenförmige Zentrierbundabschnitte vergleichsweise einfach durch Umformen hergestellt werden können. Mittels eines Umformwerkzeugs wird ein Materialfluss bewirkt, der die vergleichsweise großflächigen Zentrierbundabschnitte erzeugt. Im Gegensatz zu dem herkömmlichen Herstellungsverfahren, bei dem Blechlaschen um etwa 90° umgebogen werden, sind bei dem erfindungsgemäßen Synchronring keine festigkeitskritischen Bereiche vorhanden, in denen eine Rissbildung oder eine Faltenbildung auftritt. Dadurch wird die benötigte Festigkeit unter dynamischen Lastbedingungen erreicht.

Im Rahmen der Erfindung wird es bevorzugt, dass die bogenförmigen Zentrierbundabschnitte durch Umformen aus dem Blechmaterial hergestellt sind. Durch den Materialfluss während des Umformens wird ein ausreichendes Materialvolumen bereitgestellt, das für die Herstellung der bogenförmigen Zentrierbundabschnitte ausreicht. Zudem sind derartige Massivumformvorgänge vergleichsweise kostengünstig im Vergleich zu anderen Fertigungsverfahren wie z. B. Laserschweißen.

Es liegt auch im Rahmen der Erfindung, dass Außenflächen der Zentrierbundabschnitte auf einer Zylinderfläche liegen, deren Durchmesser dem Zentrierdurchmesser entspricht. Die Außenflächen der mehreren Zentrierbundabschnitte sind Bestandteile einer Zylinderfläche. Diese Zylinderfläche definiert den Zentrierdurchmesser, der zur radialen Zentrierung des Synchronrings in einer Nabe im eingebauten Zustand dient. Die Außenflächen der Zentrierbundabschnitte sind einfach gekrümmte Flächen.

Eine bevorzugte Weiterbildung des erfindungsgemäßen Synchronrings sieht vor, dass ein bogenförmiger Zentrierbundabschnitt symmetrisch bezüglich einer durch die Längsachse des Zylinders verlaufenden Ebene ist. Ein bogenförmiger Zentrierbundabschnitt kann gedanklich in zwei symmetrische Hälften zerlegt werden. Die Symmetrieebene ist eine die Längsachse des Zylinders schneidende Ebene.

Gemäß einer Ausgestaltung des erfindungsgemäßen Synchronrings kann es vorgesehen sein, dass ein bogenförmiger Zentrierbundabschnitt sich ausgehend von einem radialen, Sperrzähne aufweisenden Bund in Richtung des axial entgegengesetzten Endes und von dort wieder in Richtung des die Sperrzähne aufweisenden Bunds erstreckt. Es ist möglich, dass der bogenförmige Zentrierbundabschnitt die Form eines Kreissegments aufweist. Allerdings kann er auch aus mehreren Abschnitten zusammengesetzt sein, die nicht notwendigerweise ein Kreissegment bilden. Beispielsweise kann ein bogenförmiger Zentrierabschnitt aus zwei schräg zur Axialrichtung verlaufenden Abschnitten und einem mittleren, näherungsweise quer zur Axialrichtung verlaufenden Abschnitt gebildet sein. Darüber hinaus sind weitere Abwandlungen möglich. Es ist nicht unbedingt erforderlich, dass der bogenförmige Zentrierbundabschnitt einen stetigen Verlauf aufweist. Stattdessen kann er auch aus mehreren, beispielsweise zwei, drei oder vier bogenförmigen Abschnitten gebildet sein, die ineinander übergehen.

Im Rahmen der Erfindung wird es bevorzugt, dass der Synchronring drei bis sechs über den Umfang verteilte Zentrierbundabschnitte aufweist. Vorzugsweise sind die Zentrierbundabschnitte äquidistant zueinander angeordnet.

Daneben betrifft die Erfindung ein Verfahren zur Herstellung eines Synchronrings für eine Synchronisationseinheit eines Schaltgetriebes, der aus einem Blechmaterial hergestellt wird, indem an seiner Innenseite eine konusförmige Reibfläche und an seiner Außenseite Mittel zur radialen Zentrierung des Synchronrings erzeugt werden.

Das erfindungsgemäße Verfahren zeichnet sich dadurch aus, dass als Mittel zur radialen Zentrierung mehrere separate, voneinander in Umfangsrichtung beabstandete bogenförmige Zentrierbundabschnitte hergestellt werden.

Gemäß einer Weiterbildung des erfindungsgemäßen Verfahrens wird mittels eines Prägestempels ein Materialfluss an der Außenseite des zu einem Ring geformten Blechmaterials in axialer und radialer Richtung zur Herstellung der bogenförmigen Zentrierbundabschnitte bewirkt.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: eine vereinfachte, perspektivische Darstellung eines ersten Ausführungsbeispiels eines erfindungsgemäßen Synchronrings,
- Fig. 2: eine vergrößerte Ansicht eines Details des in Fig. 1 gezeigten Synchronrings,
- Fig. 3: eine Draufsicht des in Fig. 1 gezeigten Synchronrings,
- Fig. 4: eine Draufsicht auf ein Detail des in Fig. 1 gezeigten Synchronrings im Bereich eines Zentrierbundabschnitts,
- Fig. 5: einen Schnitt entlang der Linie V - V von Fig. 4,
- Fig. 6: einen Schnitt entlang der Linie VI - VI von Fig. 4,
- Fig. 7: einen Schnitt entlang der Linie VII - VII von Fig. 4 und
- Fig. 8: eine geschnittene Ansicht eines Details einer perspektivischen Ansicht eines erfindungsgemäßen Synchronrings gemäß einem zweiten Ausführungsbeispiel.

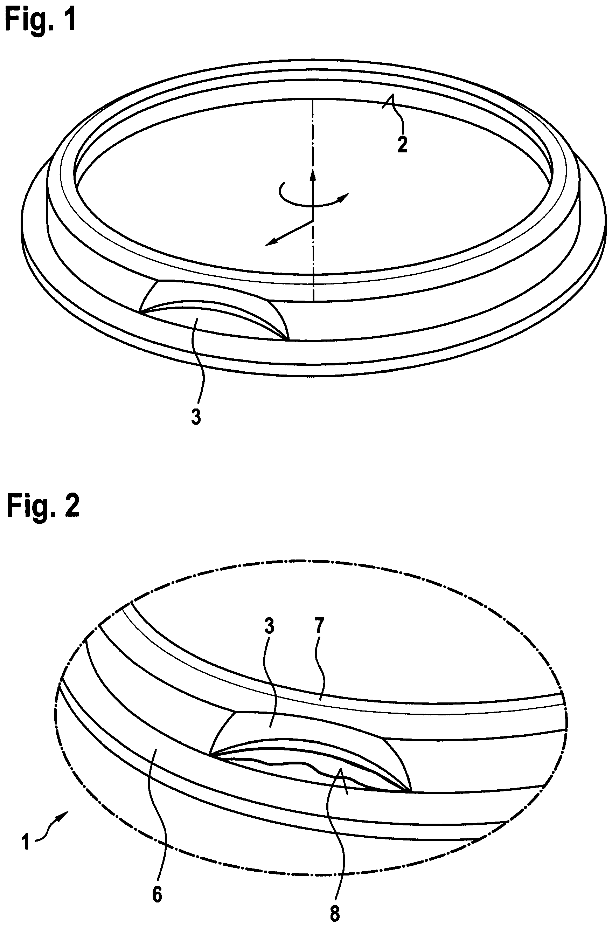

Fig. 1 ist eine perspektivische Ansicht und zeigt einen Synchronring 1 für eine Synchronisationseinheit eines Schaltgetriebes. Fig. 2 zeigt ein Detail des Synchronrings 1 in einer vergrößerten Ansicht. Der Synchronring 1 ist aus einem Blechmaterial hergestellt. Der Einfachheit halber sind bestimmte Funktionselemente in Fig. 1 nicht dargestellt. Dabei handelt es sich um eine Sperrverzahnung, die sich radial nach außen erstreckt sowie um Index- bzw. Zentrierlaschen, die sich an der Außenseite des Synchronrings 1 in Axialrichtung erstrecken sowie um Koppellaschen bzw. Koppelelemente, die sich radial nach innen erstrecken.

Der Synchronring 1 weist an seiner Innenseite eine konusförmige Reibfläche 2 auf. An seiner Außenseite sind Mittel zur radialen Zentrierung vorgesehen. In diesem Ausführungsbeispiel umfassen die Mittel mehrere separate, von einander in Umfangsrichtung beabstandete bogenförmige Zentrierbundabschnitte 3. In Fig. 1 ist lediglich ein einziger Zentrierbundabschnitt 3 dargestellt.

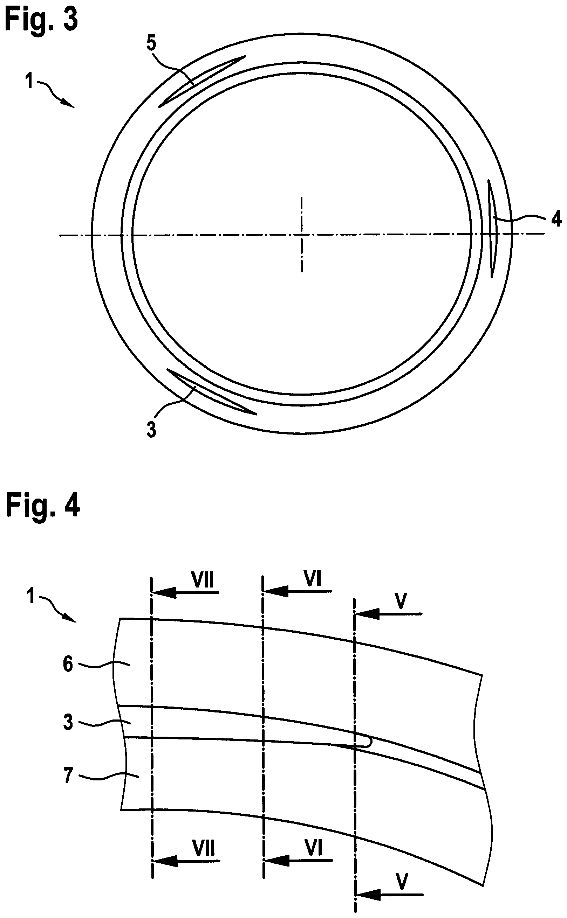

Fig. 3 ist eine Draufsicht des Synchronrings 1, in der erkennbar ist, dass dieser insgesamt drei in Umfangsrichtung (Tangentialrichtung) beabstandete, bogenförmige Zentrierbundabschnitte 3, 4, 5 umfasst. Die Zentrierbundabschnitte 3, 4, 5 sind äquidistant in Umfangsrichtung verteilt.

Der Synchronring 1 wird aus einem Blechmaterial hergestellt. Zunächst wird ein Ring hergestellt, der mittels eines Prägestempels, der in Axialrichtung bewegt wird, geformt wird. Dadurch wird ein Materialfluss in Richtung der Sperrzähne erzeugt. Der Materialfluss findet sowohl in Axialrichtung als auch in Radialrichtung statt. Die in der vergrößerten Ansicht von Fig. 2 dargestellte Wellenform der Zentrierbundabschnitte 3, 4, 5 kann auf diese Weise mit vergleichsweise wenigen Umformstufen erreicht werden. Versuche haben gezeigt, dass die Zentrierbundabschnitte 3, 4, 5 auch bei dynamischen Belastungen die erforderliche Festigkeit aufweisen.

In Fig. 2 erkennt man, dass sich der bogenförmige Zentrierbundabschnitt 3 ausgehend von einem Bund 6, der sich radial nach außen erstreckt und der die Sperrzähne (nicht gezeigt) aufweist, in Richtung des axial entgegengesetzten Endes 7 des Synchronrings 1 erstreckt. Von dort erstreckt sich der Zentrierbundabschnitt 3 wieder in Richtung des Bunds 6. Der Fig. 2 ist entnehmbar, dass der Zentrierbundabschnitt 3 symmetrisch bezüglich einer Ebene ist, die durch die Längsachse eines (gedachten) Zylinders verläuft, wobei die Zentrierbundabschnitte auf der Zylinderfläche liegen.

In Fig. 2 ist die resultierende Zentrierfläche 8 dargestellt, die sich axial und tangential erstreckt. Die Zentrierfläche ist Bestandteil der zuvor erwähnten Zylinderfläche. Durch diese Zentrierfläche 8 wird die radiale Zentrierung des Synchronrings 1 bewirkt. Die Zentrierfläche 8 ist in Tangentialrichtung gekrümmt. Sie weist in diesem Ausführungsbeispiel eine unregelmäßige Umfangslinie auf. Im Gegensatz zu einer herkömmlichen Zentrierlasche, die durch Umbiegen hergestellt worden ist, besitzt die Zentrierfläche 8 eine größere Fläche, sodass Kontaktkräfte in Axialrichtung und in Tangentialrichtung verteilt werden. Die große Zentrierfläche 8 mit einer großquerschnittigen Materialanbindung verhindert ein vorzeitiges Materialversagen, insbesondere bei dynamischer Belastung.

Fig. 4 ist eine Draufsicht auf den Synchronring 1 im Bereich des Zentrierbundabschnitts 3. In Fig. 4 sind das axiale Ende 7 des Synchronrings 1, der Zentrierbundabschnitt 3 und der Bund 6 dargestellt.

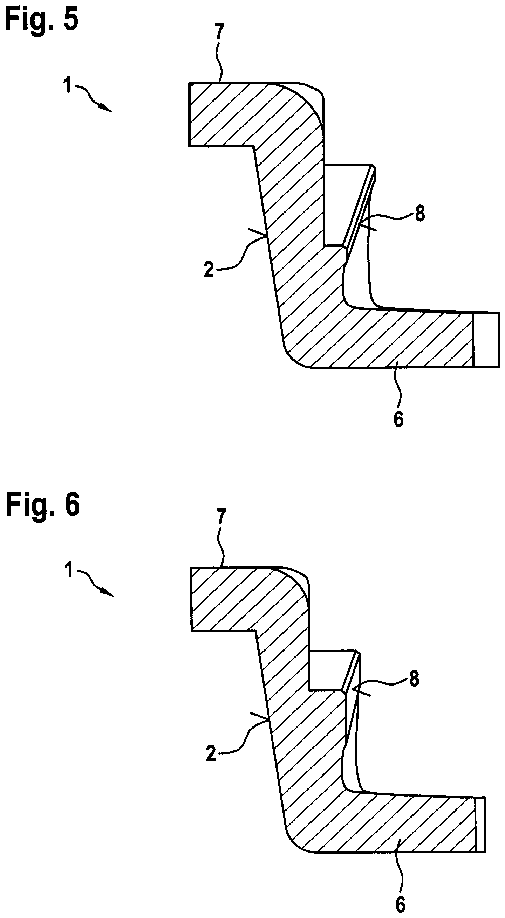

Fig. 5 ist eine geschnittene Ansicht und zeigt einen Schnitt entlang der Linie V - V von Fig. 4. In Fig. 5 erkennt man, dass durch den Umformprozess die Zentrierfläche 8 erzeugt worden ist. Die Position der Zentrierfläche 8 steigt in Blickrichtung an.

Fig. 6 ist eine ähnliche geschnittene Ansicht wie Fig. 5 und zeigt einen Schnitt entlang der Linie VI - VI von Fig. 4. Im Vergleich zu Fig. 5 erkennt man, dass die Zentrierfläche 8 in Axialrichtung breiter ist.

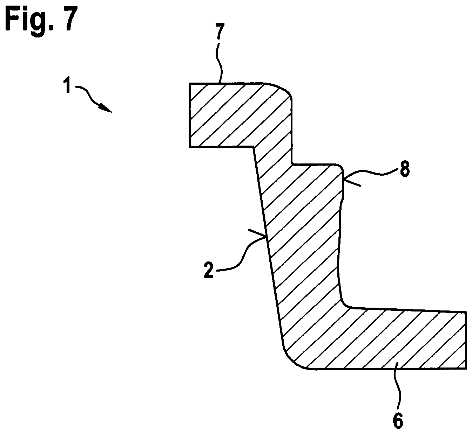

Fig. 7 ist eine ähnliche Darstellung und zeigt eine geschnittene Ansicht entlang der Linie VII - VII von Fig. 4. Die Zentrierfläche 8 ist an dieser Position schmaler im Vergleich zu Fig. 6. Die Form und Größe der Zentrierfläche 8 kann durch die Wahl eines passenden Presswerkzeugs beeinflusst werden.

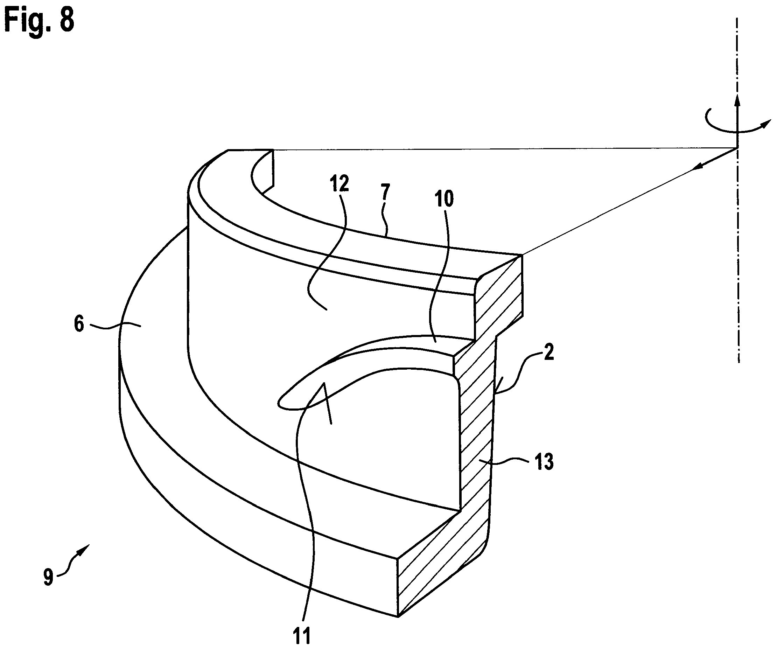

Fig. 8 ist eine geschnittene Ansicht eines Details eines zweiten Ausführungsbeispiels eines Synchronrings. Der Synchronring 9 weist grundsätzlich denselben Aufbau wie der Synchronring 1 auf. Zur Vereinfachung sind auch bei dem Synchronring 9 herkömmliche Bestandteile wie die Sperrverzahnung und Koppel- bzw. Indexlaschen nicht dargestellt.

Der Synchronring 9 weist in Übereinstimmung mit dem ersten Ausführungsbeispiel den sich radial erstreckenden Bund 6, eine an seiner Innenseite ausgebildete konusförmige Reibfläche 2 sowie ein axiales Ende 7 auf. Ein Zentrierbundabschnitt 10 mit einer Zentrierfläche 11 ist durch Umformen hergestellt. In Fig. 8 ist erkennbar, dass der Zentrierbundabschnitt 10 durch einen Materialfluss an der Außenseite 12 des Synchronrings 9 hergestellt worden ist.

Die bogenförmige Zentrierfläche 11 erstreckt sich ausgehend von dem Bund 6 axial und tangential schräg in Richtung zu dem axialen Ende 7 des Synchronrings 9. Ab einer bestimmten Stelle verringert sich die Steigung und der Zentrierbundabschnitt 10 erstreckt sich überwiegend in tangentialer Richtung. Die in Fig. 8 gezeigte Schnittebene 13 ist gleichzeitig die Symmetrieebene des Zentrierbundabschnitts 10 und der Zentrierfläche 11. Dementsprechend ist in Fig. 8 eine Hälfte des Zentrierbundabschnitts 10 dargestellt.

Die in den Ausführungsbeispielen beschriebenen Synchronringe weisen den Vorteil auf, dass die Zentrierbundabschnitte vergleichsweise einfach, mit wenigen Umformschritten hergestellt werden können. Die Synchronringe weisen im Bereich ihrer Zentrierbundabschnitte eine ausreichende Festigkeit unter dynamischer Last auf. Im Vergleich zu herkömmlichen Zentrierungen sind die Zentrierbundabschnitte sowohl in Axialrichtung als auch in Radialrichtung verbreitert. Die beschriebenen Zentrierbundabschnitte haben keinen Einfluss auf andere Funktionselemente. Insbesondere führen die Zentrierbundabschnitte nicht zu einer Verringerung von Sperrzähnen.

### Bezugszeichenliste

- 1: Synchronring
- 2: Reibfläche
- 3: Zentrierbundabschnitt
- 4: Zentrierbundabschnitt
- 5: Zentrierbundabschnitt
- 6: Bund
- 7: axiales Ende
- 8: Zentrierfläche
- 9: Synchronring
- 10: Zentrierbundabschnitt
- 11: Zentrierfläche
- 12: Außenseite
- 13: Schnittebene

## Patentansprüche

1. Synchronring (1, 9) für eine Synchronisationseinheit eines Schaltgetriebes, der aus einem Blechmaterial hergestellt ist und an seiner Innenseite eine konusförmige Reibfläche (2) und an seiner Außenseite (12) Mittel zur radialen Zentrierung des Synchronrings (1, 9) aufweist,
wobei die Mittel zur radialen Zentrierung mehrere separate, voneinander in Umfangsrichtung beabstandete bogenförmige Zentrierbundabschnitte (3, 4, 5, 10) umfassen,
**dadurch gekennzeichnet,**
**dass** Außenflächen der Zentrierbundabschnitte (3, 4, 5, 10) auf einer Zylinderfläche liegen, deren Durchmesser dem Zentrierdurchmesser entspricht, und
**dass** die bogenförmigen Zentrierbundabschnitte (3, 4, 5, 10) durch Umformen aus dem Blechmaterial hergestellt sind, wobei die Zentrierbundabschnitte (3, 4, 5, 10) durch einen Materialfluss an der Außenseite (12) des Synchronrings (1, 9) hergestellt sind.

2. Synchronring nach Anspruch 1,
**dadurch gekennzeichnet,**
**dass** ein bogenförmiger Zentrierbundabschnitt (3, 4, 5, 10) symmetrisch bezüglich einer durch die Längsachse des Zylinders verlaufende Ebene ist.

3. Synchronring nach einem der vorangehenden Ansprüche,
**dadurch gekennzeichnet,**
**dass** ein bogenförmiger Zentrierbundabschnitt (3, 4, 5, 10) sich ausgehend von einem radialen, Sperrzähne aufweisenden Bund (6) in Richtung des axial entgegengesetzten Endes (7) und von dort wieder in Richtung des die Sperrzähne aufweisenden Bunds (6) erstreckt.

4. Synchronring nach einem der vorangehenden Ansprüche,
**dadurch gekennzeichnet,**
**dass** er drei bis sechs über den Umfang verteilte Zentrierbundabschnitte (3, 4, 5 10) aufweist.

5. Verfahren zur Herstellung eines Synchronrings (1, 9) für eine Synchronisationseinheit eines Schaltgetriebes, der aus einem Blechmaterial hergestellt wird, indem an seiner Innenseite eine konusförmige Reibfläche (2) und an seiner Außenseite (12) Mittel zur radialen Zentrierung des Synchronrings erzeugt werden,
wobei als Mittel zur radialen Zentrierung mehrere separate, voneinander in Umfangsrichtung beabstandete bogenförmige Zentrierbundabschnitte (3, 4, 5, 10) hergestellt werden,
**dadurch gekennzeichnet,**
**dass** Außenflächen der Zentrierbundabschnitte (3, 4, 5, 10) auf einer Zylinderfläche liegen, deren Durchmesser dem Zentrierdurchmesser entspricht, und
**dass** die bogenförmigen Zentrierbundabschnitte (3, 4, 5, 10) durch Umformen aus dem Blechmaterial hergestellt werden, wobei die Zentrierbundabschnitte (3, 4, 5, 10) durch einen Materialfluss an der Außenseite (12) des Synchronrings (1, 9) hergestellt werden.

6. Verfahren nach Anspruch 5,
**dadurch gekennzeichnet,**
**dass** mittels eines Umformwerkzeugs der Materialfluss an der Außenseite (12) des zu einem Ring geformten Blechmaterials in axialer und radialer Richtung zur Herstellung der bogenförmigen Zentrierbundabschnitte (3, 4, 5, 10) bewirkt wird.

7. Verfahren nach Anspruch 6,
**dadurch gekennzeichnet,**
**dass** das Umformwerkzeug ein Prägestempel ist.

## Claims

1. Synchronizer ring (1, 9) for a synchronization unit of a manual transmission, which is produced from a sheet metal material and has a conical friction surface (2) on the inner side thereof and has means for radial centring of the synchronizer ring (1, 9) on the outer side (12) thereof,
wherein the means for radial centring comprise a plurality of separate arc-shaped centring collar portions (3, 4, 5, 10) spaced apart from one another in the circumferential direction,
**characterized**
**in that** outer surfaces of the centring collar portions (3, 4, 5, 10) lie on a cylindrical surface, the diameter of which corresponds to the centring diameter, and
**in that** the arc-shaped centring collar portions (3, 4, 5, 10) are produced from the sheet metal material by forming, wherein the centring collar portions (3, 4, 5, 10) are produced by a material flow on the outer side (12) of the synchronizer ring (1,9).

2. Synchronizer ring according to Claim 1,
**characterized**
**in that** an arc-shaped centring collar portion (3, 4, 5, 10) is symmetrical with respect to a plane extending through the longitudinal axis of the cylinder.

3. Synchronizer ring according to one of the preceding claims,
**characterized**
**in that** an arc-shaped centring collar portion (3, 4, 5, 10) extends from a radial collar (6) having blocking teeth in the direction of the axially opposite end (7) and, from there, back in the direction of the collar (6) having the blocking teeth.

4. Synchronizer ring according to one of the preceding claims,
**characterized**
**in that** it has three to six centring collar portions (3, 4, 5, 10) distributed over the circumference.

5. Method for producing a synchronizer ring (1, 9) for a synchronization unit of a manual transmission, which is produced from a sheet metal material by producing a conical friction surface (2) on the inner side thereof and means for radial centring of the synchronizer ring on the outer side (12) thereof, wherein a plurality of separate arc-shaped centring collar portions (3, 4, 5, 10) spaced apart from one another in the circumferential direction is produced as the means for radial centring,
**characterized**
**in that** outer surfaces of the centring collar portions (3, 4, 5, 10) lie on a cylindrical surface, the diameter of which corresponds to the centring diameter, and
**in that** the arc-shaped centring collar portions (3, 4, 5, 10) are produced from the sheet metal material by forming, wherein the centring collar portions (3, 4, 5, 10) are produced by a material flow on the outer side (12) of the synchronizer ring (1,9).

6. Method according to Claim 5,
**characterized**
**in that** the material flow on the outer side (12) of the sheet metal material formed into a ring is brought about in the axial and radial directions by means of a forming tool in order to produce the arc-shaped centring collar portions (3, 4, 5, 10).

7. Method according to Claim 6,
**characterized**
**in that** the forming tool is an stamping punch.

## Revendications

1. Bague de synchronisation (1, 9) pour une unité de synchronisation d'une boîte de vitesses, qui est fabriquée à partir de tôle et qui présente au niveau de sa face intérieure une surface de friction conique (2) et au niveau de sa face extérieure (12) des moyens de centrage radial de la bague de synchronisation (1, 9),
les moyens de centrage radial comprenant plusieurs portions d'épaulement de centrage (3, 4, 5, 10) séparées de forme courbe espacées les unes des autres dans la direction périphérique,
**caractérisée en ce que**
des surfaces extérieures des portions d'épaulement de centrage (3, 4, 5, 10) sont situées sur une surface cylindrique dont le diamètre correspond au diamètre de centrage, et
**en ce que** les portions d'épaulement de centrage (3, 4, 5, 10) de forme courbe sont fabriquées par déformation de la tôle, les portions d'épaulement de centrage (3, 4, 5, 10) étant fabriquées par un flux de matériau au niveau de la face extérieure (12) de la bague de synchronisation (1, 9).

2. Bague de synchronisation selon la revendication 1, **caractérisée en ce**
**qu'**une portion d'épaulement de centrage (3, 4, 5, 10) de forme courbe est symétrique par rapport à un plan s'étendant à travers l'axe longitudinal du cylindre.

3. Bague de synchronisation selon l'une quelconque des revendications précédentes,
**caractérisée en ce**
**qu'**une portion d'épaulement de centrage (3, 4, 5, 10) de forme courbe s'étend à partir d'un épaulement radial (6) présentant des dents de blocage dans la direction de l'extrémité axialement opposée (7) et de là, à nouveau dans la direction de l'épaulement (6) présentant les dents de blocage.

4. Bague de synchronisation selon l'une quelconque des revendications précédentes,
**caractérisée en ce**
**qu'**elle présente trois à six portions d'épaulement de centrage (3, 4, 5, 10) réparties sur la périphérie.

5. Procédé de fabrication d'une bague de synchronisation (1, 9) pour une unité de synchronisation d'une boîte de vitesses, qui est fabriquée à partir de tôle en produisant au niveau de sa face intérieure, une surface de friction conique (2) et au niveau de sa face extérieure (12), des moyens de centrage radial de la bague de synchronisation,
plusieurs portions d'épaulement de centrage (3, 4, 5, 10) séparées de forme courbe espacées les unes des autres dans la direction périphérique étant fabriquées en tant que moyens de centrage radial, **caractérisé en ce que**
des surfaces extérieures des portions d'épaulement de centrage (3, 4, 5, 10) sont situées sur une surface cylindrique dont le diamètre correspond au diamètre de centrage, et
**en ce que** les portions d'épaulement de centrage (3, 4, 5, 10) de forme courbe sont fabriquées par déformation de la tôle, les portions d'épaulement de centrage (3, 4, 5, 10) étant fabriquées par un flux de matériau au niveau de la face extérieure (12) de la bague de synchronisation (1, 9).

6. Procédé selon la revendication 5,
**caractérisé en ce que**
le flux de matériau est réalisé au moyen d'un outil de formage au niveau de la face extérieur de la face extérieure (12) de la tôle façonnée en forme de bague dans la direction axiale et dans la direction radiale pour fabriquer les portions d'épaulement de centrage (3, 4, 5, 10) de forme courbe.

7. Procédé selon la revendication 6,
**caractérisé en ce que**
l'outil de formage est un poinçon d'estampage.
